# EUROPÄISCHE PATENTSCHRIFT

(11) **EP 3 018 339 B1**
(45) Veröffentlichungstag und Bekanntmachung des Hinweises auf die Patenterteilung: **12.07.2017**
(21) Anmeldenummer: 15190133.7
(22) Anmeldetag: 16.10.2015
(51) Int. Cl.: F02M 57/00, G01L 9/00, G01L 19/14, F02M 51/00

(54) **INJEKTOR**
INJECTOR
INJECTEUR

(30) Priorität: 07.11.2014 DE 102014222796
(43) Veröffentlichungstag der Anmeldung: 11.05.2016
(73) Patentinhaber: ROBERT BOSCH GMBH, 70442 Stuttgart (DE)
(72) Erfinder: Kreschel, Henning, 71640 Ludwigsburg (DE); Stieber, Marco, 71665 Vaihingen An Der Enz (DE); Haug, Stefan, 71111 Waldenbuch (DE); Fischer, Fabian, 70176 Stuttgart (DE); Schnaufer, Axel, 70435 Stuttgart (DE); Forke, Martin, 70499 Stuttgart (DE)

(56) Entgegenhaltungen:
- WO-A2-2009/019663
- DE-A1- 19 813 756
- DE-A1-102010 016 424
- US-A- 4 425 800

## Beschreibung

Die Erfindung betrifft einen Injektor aufweisend einen Injektorkörper sowie einen Düsenkörper mit einer einen Düsennadel aufnehmenden Bohrung, wobei die Düsennadel in der Bohrung translatorisch bewegbar ist, und eine mit einem Düsenkörpersitz zusammenwirkende Düsennadelspitze aufweist, wobei den Düsenkörpersitz zumindest eine Düsenöffnung zugeordnet ist, die gesteuert von der Düsennadel mit einer Hochdruckleitung für ein Medium in dem Injektorkörper und dem Düsenkörper verbunden ist, und wobei ein Sensor zur Aufnahme eines Druckverlaufs des Mediums vorgesehen ist.

### Stand der Technik

Ein derartiger Injektor ist aus der WO 99/32 783 bekannt. Dieser Injektor weist einen Injektorkörper und einen Düsenkörper mit einer in einer Bohrung geführten Düsennadel auf, wobei die Düsennadel mit einer Düsenspitze in einem Düsenkörpersitz eingreift. Bei einer Öffnungsbewegung gibt die Düsennadel eine Düsenöffnung frei, durch die ein durch eine Hochdruckleitung in dem Injektorkörper und dem Düsenkörper geführtes Medium gespritzt wird. In dem Injektorkörper ist ein Ventil angeordnet, das einen Hochdruckraum für das Medium in eine Niederdruckleitung entlasten kann. Bei einer Entlastung des Hochdruckraums wird die Düsennadel axial zur Freigabe der Düsenöffnung verstellt. Im Bereich des Ventils ist ein ringförmiger Sensor zur Aufnahme eines Druckverlaufs des Mediums angeordnet.

Auch aus der WO 2009/019663 A2 ist ein Injektor mit einem Drucksensor bekannt.

Der Erfindung liegt die Aufgabe zugrunde, einen Injektor mit einem Sensor zur Bestimmung eines Druckverlaufs eines durch den Injektor geführten Mediums anzugeben, der hinsichtlich seiner Funktion verbessert ist.

Diese Aufgabe wird dadurch gelöst, dass der Sensor in einer zu der Hochdruckleitung ausgerichteten Ausnehmung eingesetzt ist, und dass die Ausnehmung auf der von der Hochdruckleitung abgewandten Seite von einem Deckel verschlossen ist. Diese Anordnung des Sensors ermöglicht eine präzise Aufnahme des Druckverlaufs des durch die Hochdruckleitung strömenden Mediums, wobei durch den Deckel sichergestellt ist, dass der Sensor zuverlässig in der Ausnehmung gehalten ist. Diese so gebildete Halterung für den Sensor ist bedeutend haltbarer als eine herkömmliche Halterung, bei der der Sensor nur durch eine Klebeverbindung an dem Injektor befestigt ist.

Erfindungsgemäß ist der Sensor auf Druck vorgespannt. Dies ist besonders vorteilhaft, da durch die Vorspannung die mechanische Belastung auf den Werkstoff des Sensors angepasst werden kann, so dass die Belastung eine geringere Zugspannung erfährt. Beispielsweise kann der Sensor ein piezokeramischer Sensor sein. Grundsätzlich können aber auch andere Sensoren zum Einsatz kommen. Die geringere auf den beispielsweise piezokeramischen Sensor einwirkende Zugspannung wirkt sich positiv auf die Haltbarkeit und damit die Funktion des Sensors aus. Der Sensor wird bevorzugt axial beispielsweise mit einer von einer Druckschwankung des Mediums ausgehenden Kraft belastet und liefert entsprechend dem Hydraulikdruckverlauf in dem Injektor ein Signal, welches beispielsweise zur Detektion charakteristischer Betriebszustände, wie einem Öffnen oder einem Schließen der Strömungsverbindung zwischen der Hochdruckleitung und der Düsenöffnung durch die Düsennadel genutzt werden kann.

Erfindungsgemäß ist der Sensor zwischen einer an die Hochdruckleitung angrenzenden Bodenwand der Ausnehmung und dem in die Ausnehmung eingebauten Deckel vorgespannt. Dadurch ist der Sensor einstellbar so auf Druck vorgespannt, dass dieser axial mit der in der Hochdruckleitung herrschenden Druckschwankung belastet wird und entsprechend dem Druckverlauf in der Hochdruckleitung ein Signal liefert, das zur Detektion insbesondere eines Öffnungsvorgangs und eines Schließvorgangs der Düsennadel genutzt werden kann. Durch die Vorspannung des Sensors zwischen der Bodenwand und dem Deckel entfällt ein als kritisch zu bewertender Kleber, mit dem der Sensor nach einer herkömmlichen Befestigungsmethode an dem Injektor befestigt ist. Hierbei ist zu berücksichtigen, dass bei einem herkömmlich angeklebten Sensor bei der Übertragung des Druckes einer Hochdruckleitung Zugspannungen in den Werkstoff des Sensors eingeleitet werden. Je nach der Größe der Zugspannungen kann der Sensor beschädigt und schlimmstenfalls zerstört werden. Durch eine einseitige Klebung wird die Deformation des Injektors durch die Druckänderung ausschließlich in Form von Schubspannungen in den Sensor eingeleitet. Dadurch entsteht über die Dicke des Sensors ein inhomogener Dehnungszustand. Somit wird das Potenzial des Sensors zur Signalmessung nur teilweise ausgenutzt. Weiterhin ist die Dauerhaltbarkeit von einem üblichen Kleber als kritisch gegenüber einer typischen Nutzungszeit des Injektors von circa 15 Jahren bei Temperaturen zwischen -40° Celsius bis + 160° Celsius zu bewerten. Dagegen lässt sich erfindungsgemäß durch eine geschickte Wahl der Wärmeausdehnungskoeffizienten der beteiligten Längen der jeweiligen Komponenten der Einfluss durch Betriebstemperaturen und Umgebungstemperaturen zumindest weitgehend ausgleichen, was ebenfalls die Robustheit und somit die zuverlässige Funktion des Systems weiter erhöht.

Erfindungsgemäß ist der Deckel mit dem Injektionskörper verschweißt. Dabei ist während des Schweißvorgangs der Sensor zwischen der Bodenwand und dem Deckel auf einen definierten Wert vorgespannt. Hierbei ist es vorgesehen, dass der Deckel zwischen dem Injektorkörper und dem Sensor eine freie Länge L_{f} aufweist, die nicht mit dem Injektorkörper verbunden ist. Diese freie Länge L_{f} gewährleistet einen Temperaturausgleich, auf den nachfolgend noch eingegangen wird.

In Weiterbildung der Erfindung ist die Ausnehmung in dem Injektorkörper angeordnet. Wenn auch die Ausnehmung grundsätzlich in dem Düsenkörper oder gegebenenfalls einem sonstigen Bauteil des Injektors angeordnet sein kann, ist die besonders vorteilhafte Anordnung in dem Injektorkörper realisiert. Hierbei ist es so, dass an den Injektorkörper ohne gegebenenfalls notwendige konstruktive Umgestaltungen ein entsprechender Bauraum zur Anordnung der Ausnehmung vorhanden ist. Dabei kann die Ausnehmung beispielsweise als Bohrung einfach gefertigt sein.

In Weiterbildung der Erfindung weist der Werkstoff des Deckels einen anderen, insbesondere größeren, Temperaturausdehnungskoeffizienten als der Injektorkörper und/oder der Düsenkörper, an dem in der verwirklichten Ausführungsform die Ausnehmung angeordnet ist, auf. Dadurch kann bei einer als vorgegeben angenommenen Bauteilhöhe des Sensors unter Einbezug von Elektroden zur Signalübertragung und gegebenenfalls vorhandener Isolationskörper und einer bestimmten Deckelhöhe sowie einer Tiefe der Befestigung, insbesondere einer Schweißnahttiefe Sₜ, bei Verwendung eines Werkstoffes mit einer größeren thermischen Ausdehnung für den Deckel als für den Injektorkörper (oder Düsenkörper) ein Temperaturlängenausgleich geschaffen werden, der insbesondere im Temperaturbetriebsbereich des Injektors wirksam ist.

In weiterer Ausgestaltung der Erfindung ist der Sensor so vorgespannt, dass ein Steifigkeitsmaximum einer Baugruppe bestehend aus zumindest dem Injektorkörper (oder dem Düsenkörper), dem Sensor und dem Deckel in dem Temperaturbetriebsbereich des Injektors eingestellt ist. Dadurch wird eine steife Schaltkette der verbauten Komponenten erzielt, um ein größtmögliches elektrisches Signal zu erzeugen. Für die Steifigkeit der Gesamtschaltkette ist der Deckel von großer Bedeutung. Die Steifigkeit hängt einerseits von der Biegesteifigkeit des Deckels selbst und von der Tiefe der Befestigung, insbesondere der Schweißnahttiefe Sₜ ab. Andererseits gibt die Schweißnahttiefe Sₜ eine freie Länge L_{f} des Deckels an, welche dann wiederum die Steifigkeit durch Stauchung des freien Endes verringert.

In weiterer Ausgestaltung der Erfindung ist die als Membran wirkende Bodenwand zumindest angenähert rechtwinklig zu der Hochdruckleitung ausgerichtet. Dabei kann die Dicke der Bodenwand zumindest in einen zentralen Bereich gegenüber der Hochdruckleitung auf den in der Hochdruckleitung herrschenden Drucks so abgestimmt sein, dass durch die Druckschwankungen in der Hochdruckleitung eine reversible Deformation bzw. nach außen gerichtete Wölbung der Bodenwand erfolgt.

In weiterer Ausgestaltung der Erfindung ist zwischen der Bodenwand und dem Sensor ein Druckverteiler angeordnet. Durch den Einsatz des Druckverteilers wird ein größerer Stirnflächenhub genutzt, wobei der Druckverteiler die anliegende Verformung vorzugsweise über eine Elektrode auf den Sensor überträgt. Der Druckverteiler kann in kegeliger oder zylindrischer Form ausgebildet sein. Die Gegenkraft für den Sensor wird über den Deckel und über eine zweite Elektrode auf den Sensor aufgebracht, so dass der Sensor bei einer Verformung der Bodenwand gestaucht wird. Der Deckel dient dabei gleichzeitig für die Einstellung der auf den Sensor und die damit gegebenenfalls zusammenwirkenden weiteren Bauteile wirkenden Vorspannung.

In Weiterbildung der Erfindung ist zwischen den Sensor und dem Deckel ein Isolationskörper angeordnet. Diese Anordnung eines Isolationskörpers hängt von der Auswahl der Werkstoffe für den Druckverteiler und den Deckel ab, da für eine elektrische Isolation des Sensors gesorgt werden muss, um einen Kurzschluss zu vermeiden. Der Isolator kann beispielsweise aus einem Kunststoff oder aber bevorzugt aus einem keramischen Werkstoff bestehen, wobei ein keramischer Werkstoff aufgrund des höheren E-Moduls vorzuziehen ist. Keramische Werkstoffe weisen normalerweise kleinere Temperaturdehnungskoeffizienten auf als Stahl, während piezokeramische Werkstoffe sogar negative Temperaturdehnungen aufweisen. Daher muss für diesen Fall der Deckel einen höheren Temperaturdehnungskoeffizienten aufweisen als der Injektorkörper (oder der Düsenkörper). Weiterhin kann es vorteilhaft sein, als Montagehilfe einen beispielsweise Käfig aus Kunststoff um den Sensor, die Elektroden, den Druckverteiler und den Isolationskörper herum vorzusehen. Dadurch kann die so vormontierte Baugruppe einfach in der Ausnehmung montiert werden und mit dem Deckel mit einer definierten Kraft vorgespannt werden, während der Deckel mit dem Injektorkörper beispielweise verschweißt wird. Die zuvor genannte Baugruppe kann auch unter Zuhilfenahme eines Klebstoffs gegebenenfalls unter Einsparung des Käfigs fixiert werden, um den Fügevorgang vor dem Schweißen zu vereinfachen.

In Weiterbildung der Erfindung ist der Injektor ein Kraftstoffinjektor und das Medium Kraftstoff. Wenn auch der Gegenstand der vorliegenden Erfindung bei einem beliebigen Injektor angewendet werden kann, ist die bevorzugte Anwendung bei einem Kraftstoffinjektor gegeben. Ein solcher Kraftstoffinjektor ist Teil eines Kraftstoffeinspritzsystems, mit dem Kraftstoff, beispielsweise Dieselkraftstoff in einen Brennraum einer Brennkraftmaschine eingespritzt wird.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Figur 1: eine Ansicht eines Injektors mit einem teilweisen Längsschnitt durch den Injektor mit einer Darstellung einer Positionierung eines Sensors in einer in einen Injektorkörper eingelassenen Ausnehmung,
- Figur 2: einen Querschnitt durch einen Injektorkörper mit einer Darstellung eines in eine Ausnehmung in dem Injektorkörper eingesetzten Sensors,
- Figur 3: einen Schnitt A-A gemäß Figur 2,
- Figur 4: einen Querschnitt durch einen Injektorkörper mit einer Darstellung eines in eine Ausnehmung in den Injektorkörper eingesetzten Sensors in einer weiteren Ausführungsform und
- Figur 5: Diagramme mit einer Darstellung einer optimalen Höhe eines Deckels bei einer temperaturneutralen Einschweißtiefe einer Verbindung des Deckels mit dem Injektorkörper.

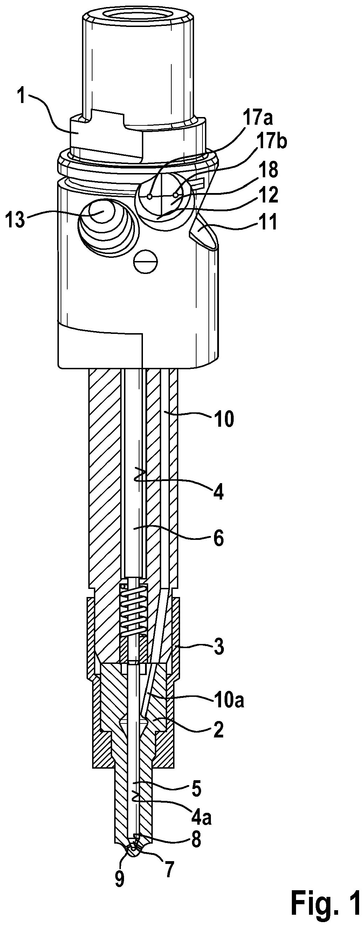

Der in Figur 1 dargestellte Injektor ist ein Kraftstoffinjektor, mit dem unter Druck stehender Kraftstoff, der beispielsweise einem Speicher eines Common-Rail-Einspritzsystems entnommen wird, in einen Brennraum einer Brennkraftmaschine, an der das Einspritzsystem verbaut ist, eingespritzt wird. Dabei ist der Kraftstoff insbesondere Dieselkraftstoff und die Brennkraftmaschine eine selbstzündende Brennkraftmaschine. Der Kraftstoffinjektor weist einen Injektorkörper 1 auf, der mit einem Düsenkörper 2 mittels einer Überwurfmutter 3 verschraubt ist. In dem Injektorkörper 1 und dem Düsenkörper 2 ist eine Bohrung 4, 4a eingearbeitet, in der eine Düsennadel 5 und eine mit der Düsennadel 5 zusammenwirkende Betätigungsstange 6 axial beweglich angeordnet sind. In einer Schließstellung der Düsennadel 5 wirkt eine Düsennadelspitze 7 der Düsennadel 5 mit einem Düsenkörpersitz 8 zusammen und verschließt zumindest eine Düsenöffnung 9, die in dem Düsenkörper 2 unterhalb des Düsenkörpersitzes 8 angeordnet ist.

In einer Öffnungsstellung der Düsennadel 5 befindet sich die Düsennadelspitze 7 in einer beabstandeten Stellung zu dem Düsenkörpersitz 8 und gibt dann eine Strömungsverbindung durch eine in den Injektorkörper 1 und den Düsenkörper 2 eingelassene Hochdruckleitung 10, 10a zu der zumindest einen Düsenöffnung 9 frei. In dieser Stellung wird beispielsweise aus dem Hochdruckspeicher in die Hochdruckleitung 10, 10a eingebrachter Kraftstoff durch die zumindest eine Düsenöffnung 9 in den zugeordneten Brennraum der Brennkraftmaschine eingespritzt.

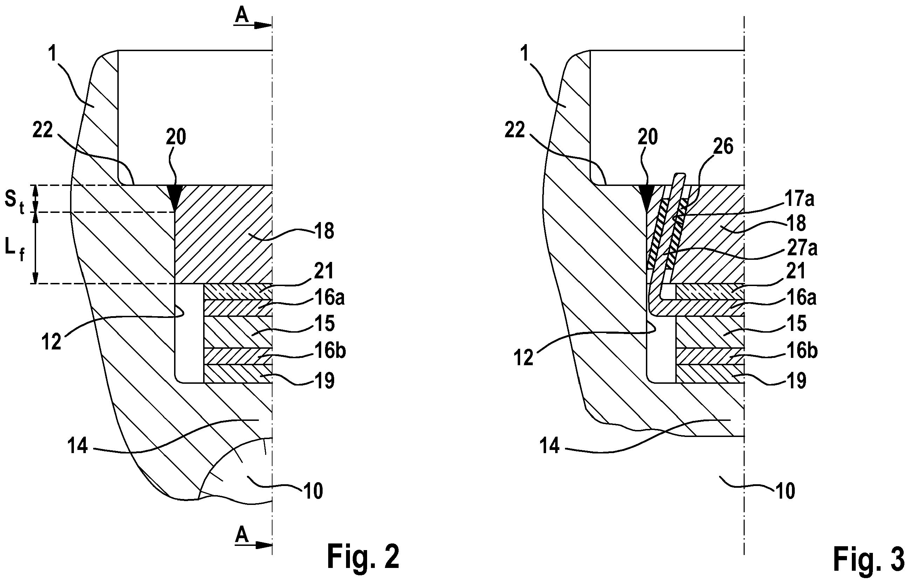

Die Düsennadel 5 wird über die Betätigungsstange 6 von einem in einer Aktorraumbohrung in dem Injektorkörper eingebauten Aktor direkt oder indirekt in die Öffnungsstellung und die Schließstellung verstellt, wobei zur Herstellung einer elektrischen Verbindung zwischen dem Aktor und einem Steuergerät eine Steuerleitung vorhanden ist, die von einer Aktorraumbohrung 11 in dem Injektorkörper 1 nach außen geführt ist. Weiterhin weist der Injektorkörper 1 eine Ausnehmung 12 auf, wobei in die Ausnehmung 12 ein Sensor 15 (Figur 2) oder Paket von Sensoren 15 eingesetzt ist. Die Ausnehmung ist nach außen von einem nachfolgend noch genauer beschriebenen Deckel 18 verschlossen, wobei der Deckel 18 in der Ausnehmung 12 mit dem Injektorkörper 1 verschweißt ist. In den Deckel 18 sind Öffnungen 17a, 17b zur Durchführung von mit dem Sensor 15 zusammenwirkenden Signalleitungen eingelassen. Weiterhin weist der Injektorkörper 1 einen Rücklaufleitungsanschluss 13 für eine Rücklaufleitung auf, die in den Injektorkörper 1 und gegebenenfalls in den Düsenkörper 2 eingelassen ist.

Ausweislich der Figur 2 ist die Ausnehmung 12 zumindest angenähert rechtwinklig zu der Hochdruckleitung 10 in den Injektorkörper 1 eingelassen und zwischen der Hochdruckleitung 10 und der Ausnehmung 12 ist eine eine Membran bildende Bodenwand 14 dem Injektorkörper 1 gebildet.

Durch Druckpulsationen in der Hochdruckleitung 10, die in einem direkten Zusammenhang mit der Öffnungsbewegung und der Schließbewegung der Düsennadel 5 gegenüber dem Düsenkörpersitz 8 stehen, wird die Bodenwand 14 durch eine abgestimmte reduzierte Wandstärke reversibel verformt bzw. gibt nach und bäumt sich in Richtung zu der Ausnehmung 12 aus. Diese Verformung bzw. Ausbäumung, die mittig der Bodenwand 14 am größten ist, wird von einem in die Ausnehmung 12 eingesetzten piezokeramischen Sensor 15, der ein Einzelsensor oder ein Sensorpaket ist, aufgenommen. Der Sensor 15 wirkt mit einer ersten Elektrode 16a und einer zweiten Elektrode 16b zusammen, die durch eine Verformung des Sensors 15 hervorgerufene Spannungssignale des piezokeramischen Sensors 15 übertragen. Die von der ersten Elektrode 16a und der zweiten Elektrode 16b aufgenommenen Spannungssignale werden über die zuvor genannten Signalleitungen, die direkt oder über Kontaktierungen mit den Elektroden 16a, 16b zusammenwirken, durch die Öffnung 17a, 17b (siehe auch Figur 3, hier ist die Öffnung 17a mit der durchgeführten Signalleitung 27a dargestellt) in dem Deckel 18 nach außen geführt. Die Signalleitungen sind in den Öffnungen 17a, 17b von Dichtungen 26 umgeben, die den Sensorraum vor Umgebungseinflüssen schützen und zudem eine Isolation der Signalleitungen gegenüber dem Deckel 18 herstellen.

Zwischen der Elektrode 16b und der Bodenwand 14 ist zur Nutzung eines größeren Stirnflächenhubs ein Druckverteiler 19 angeordnet, der die auf die Bodenwand 14 ausgeübte Verformung auf den Sensor 15 überträgt. Der Druckverteiler 19 kann eine kegelige oder zylindrische Form aufweisen und beispielsweis aus einem metallischen oder keramischen Werkstoff gefertigt sein.

Um durch die Verformung den Sensor 15 wirkungsvoll und schädigungsfrei zu belasten bzw. zu stauchen und zu entlasten, ist der Deckel 18 vorgesehen, der in die Ausnehmung 12 eingesetzt und insbesondere unter Bildung einer Schweißnaht 20 mit einer Schweißnahttiefe Sₜ mit dem Injektionskörper 1 verschweißt ist. Dabei ist während des Schweißvorgangs der Sensor 15 unter Einschluss der zuvor erläuterten weiteren Komponenten zwischen der Bodenwand 14 und dem Deckel 18 auf einen definierten Wert vorgespannt. Durch diese Vorspannung kann die mechanische Belastung auf den piezokeramischen Werkstoff des Sensors 15 angepasst bzw. eingestellt werden, so dass dieser eine geringere Zugspannung erfährt, was sich positiv auf dessen Haltbarkeit auswirkt. Zusätzlich entfällt ein als zumindest dauerhaltbar kritisch anzusehender Kleber, mit dem der Sensor 15 nach einer herkömmlichen Befestigungsmethode an dem Injektorkörper 1 befestigt ist. Durch die Festlegung des Deckels 18 über die Schweißnaht 20 in der Ausnehmung 12 des Injektorkörpers 1 verbleibt eine freie Länge L_{f} des Deckels 18 gegenüber der Ausnehmung 12 in den Injektorkörper 1. Durch eine abgestimmte Wahl der Wärmeausdehnungskoeffizienten insbesondere des Injektorkörpers 1 und des Deckels 18, wobei der Wärmeausdehnungskoeffizient des Deckels 18 größer ist als der Temperaturausdehnungskoeffizient des Injektorkörpers 1, lässt sich der Einfluss auf die von dem Sensor 15 aufgenommene Signalstärke, die durch Betriebstemperaturen und Umgebungstemperaturen beeinflusst ist, größtenteils ausgleichen, was die Robustheit des Systems weiter erhöht.

Um eine Isolation der Elektrode 16a gegenüber dem Deckel 18 zu gewährleisten, ist ein Isolationskörper 21 vorgesehen, der aus beispielsweise einem keramischen Werkstoff besteht und als Folie oder sonstiges Bauelement ausgestaltet ist, die/das zwischen der Elektrode 16a und dem beispielsweise aus einem metallischen Werkstoff gefertigten Deckel 18 angeordnet ist. Für den Fall, dass der Deckel 18 und/oder der Druckverteiler 19 aus einem isolierenden Werkstoff (beispielsweise ebenfalls einen keramischen Werkstoff) gefertigt sind, kann der Isolationskörper 21 entfallen. Um eine problemlose Montage zu gewährleisten, kann ein Käfig vorgesehen sein, der den Druckverteiler 19, die Elektrode 16a, den Sensor 15, die Elektrode 16b und den Isolationskörper 21 umfasst. Bei dem Ausführungsbeispiel das in den Figuren 2 und 3 in unterschiedlichen Schnitten dargestellt ist, weist die Ausnehmung 12 im Bereich des äußeren Endes des Deckels 18 einen Absatz 22 auf, der sicherstellt, dass die Schweißnaht 20 problemlos in den Injektorkörper 1 und den Deckel 18 einbringbar ist. Schließt der Deckel 18 mit dem Außenumfang des Injektorkörpers 1 ab, kann der Absatz 22 auch entfallen.

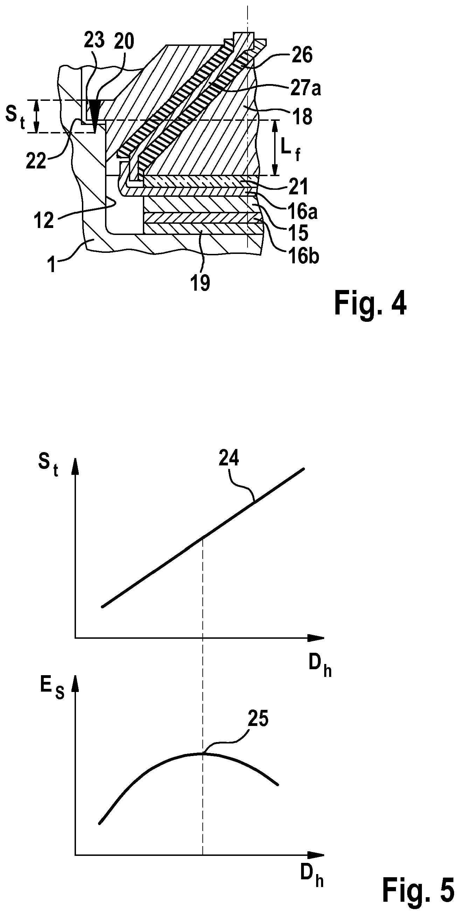

Bei dem Ausführungsbeispiel gemäß Figur 4 weist der Deckel 18 einen flanschartigen und ringförmig ausgebildeten Vorsprung 23 auf, der zumindest angenähert einen der Tiefe des Absatzes 22 entsprechenden Umfang aufweist. Durch den Absatz 22 wird die Schweißnaht 20 hindurch bis in den Absatz 22 des Injektorkörpers 21 eingebracht. Diese Ausgestaltung hat den Vorteil, dass die freie Länge L_{f} des Deckels 18 nicht von der Schweißnahttiefe Sₜ der Schweißnaht 20 abhängig ist. Umgekehrt muss der Deckel 18 mit seinem umlaufenden Vorsprung 23 einen zumindest geringen Abstand zu den Absatz 22 aufweisen, um die auf den Sensor 15 wirkende Vorspannung genau einstellen zu können. Bei einer Anlage des Vorsprungs 23 auf dem Absatz 22 kann die auf den Sensor 15 ausgeübte Vorspannung aber beispielsweise auch durch unterschiedlich dick ausgestaltete Isolationskörper 21 eingestellt werden, die wahlweise verbaut werden.

In dem oberen Diagramm gemäß Figur 5 ist als Kennlinie eine temperaturneutrale Einschweißtiefe 24 über der Deckelhöhe Dₕ (Abszisse) und der Schweißnahttiefe Sₜ (Ordinate) dargestellt. In dem darunterliegenden Diagramm ist auf einer parabelförmigen Kennlinie ein Steifigkeitsmaximum 25 angegeben, wobei die Abszisse dieses Diagramms ebenfalls die Deckelhöhe Dₕ und die Ordinate die Stärke des von dem Sensor 15 aufgenommenen elektrischen Signals Eₛ bezeichnet. Das Steifigkeitsmaximum 25 liegt im Scheitelpunkt der parabelförmigen Kennlinie und entspricht einem zugeordneten Wert der temperaturneutralen Schweißnahttiefe Sₜ des darüber liegenden Diagramms. Bei diesem Steifigkeitsmaximum 25 wird ein maximaler Wert des elektrischen Signals Eₛ erreicht.

## Patentansprüche

1. Injektor aufweisend einen Injektorkörper (1) sowie einen Düsenkörper (2) mit einer eine Düsennadel (5) aufnehmenden Bohrung (4a), wobei die Düsennadel (5) in der Bohrung (4a) translatorisch bewegbar ist, und eine mit einem Düsenkörpersitz (8) zusammenwirkende Düsennadelspitze (7) aufweist, wobei dem Düsenkörpersitz (8) zumindest eine Düsenöffnung (9) zugeordnet ist, die gesteuert von der Düsennadel (5) mit einer Hochdruckleitung (10, 10a) für ein Medium in dem Injektorkörper (1) und/oder dem Düsenkörper (2) verbunden ist, und wobei ein Sensor (15) zur Aufnahme eines Druckverlaufs des Mediums vorgesehen ist, wobei der Sensor (15) in einer zu der Hochdruckleitung (10, 10a) ausgerichteten Ausnehmung (12) eingesetzt ist, und dass die Ausnehmung (12) auf der von der Hochdruckleitung (10, 10a) abgewandten Seite von einem Deckel (18) verschlossen ist,
**dadurch gekennzeichnet, dass** der Sensor (15) zwischen einer an die Hochdruckleitung (10) angrenzenden Bodenwand (14) der Ausnehmung (12) und dem in die Ausnehmung (12) eingebauten Deckel (18) auf Druck vorgespannt ist und dass der Deckel (18) mit dem Injektorkörper (1) verschweißt ist, wobei während des Schweißvorgangs der Sensor (15) zwischen der Bodenwand (14) und dem Deckel (18) auf einen definierten Wert vorgespannt ist.

2. Injektor nach Anspruch 1,
**dadurch gekennzeichnet, dass** die Ausnehmung (12) in dem Injektorkörper (1) angeordnet ist.

3. Injektor nach einem der vorherigen Ansprüche,
**dadurch gekennzeichnet, dass** der Werkstoff des Deckels (18) einen anderen, insbesondere einen größeren, Temperaturausdehnungskoeffizienten als der Injektorkörper (1) und/oder der Düsenkörper (2) aufweist.

4. Injektor nach Anspruch 1 oder 3,
**dadurch gekennzeichnet, dass** der Sensor (15) so vorgespannt ist, dass ein Steifigkeitsmaximum (25) einer Baugruppe bestehend aus zumindest dem Injektorkörper (1) und/oder dem Düsenkörper (2), dem Sensor (15) und dem Deckel (18) in einem Temperaturbetriebsbereich des Injektors (15) eingestellt ist.

5. Injektor nach Anspruch 1, 3 oder 4,
**dadurch gekennzeichnet, dass** die als Membran wirkende Bodenwand (14) zumindest angenähert rechtwinklig zu der Hochdruckleitung (10, 10a) ausgerichtet ist.

6. Injektor nach Anspruch 1, 3, 4 oder 5,
**dadurch gekennzeichnet, dass** zwischen der Bodenwand (14) und dem Sensor (15) ein Druckverteiler (19) angeordnet ist.

7. Injektor nach Anspruch 1, 3, 4, 5 oder 6,
**dadurch gekennzeichnet, dass** zwischen dem Sensor (15) und dem Deckel (18) ein Isolationskörper (21) angeordnet ist.

8. Injektor nach einem der vorherigen Ansprüche,
**dadurch gekennzeichnet, dass** der Injektor ein Kraftstoffinjektor ist, und dass das Medium Kraftstoff ist.

## Claims

1. Injector having an injector body (1) and having a nozzle body (2) with a bore (4a) which accommodates a nozzle needle (5), wherein the nozzle needle (5) is movable in translational fashion in the bore (4a) and has a nozzle needle tip (7) which interacts with a nozzle body seat (8), wherein the nozzle body seat (8) is assigned at least one nozzle opening (9) which is connected, in a manner controlled by the nozzle needle (5), to a high-pressure line (10, 10a) for a medium in the injector body (1) and/or in the nozzle body (2), and wherein a sensor (15) for recording a pressure profile of the medium is provided, wherein the sensor (15) is inserted in a recess (12) which is oriented towards the high-pressure line (10, 10a), and in that the recess (12) is closed off, on the side averted from the high-pressure line (10, 10a), by a cover (18), **characterized in that** the sensor (15) is preloaded under pressure between a base wall (14), which adjoins the high-pressure line (10), of the recess (12) and the cover (18) installed in the recess (12), and **in that** the cover (18) is welded to the injector body (1), wherein, during the welding process, the sensor (15) is preloaded between the base wall (14) and the cover (18) to a defined value.

2. Injector according to Claim 1,
**characterized in that** the recess (12) is arranged in the injector body (1).

3. Injector according to one of the preceding claims, **characterized in that** the material of the cover (18) has a different, in particular a greater, coefficient of thermal expansion than the injector body (1) and/or the nozzle body (2).

4. Injector according to Claim 1 or 3,
**characterized in that** the sensor (15) is preloaded such that a stiffness maximum (25) of an assembly composed of at least the injector body (1) and/or the nozzle body (2), the sensor (15) and the cover (18) is set in a temperature operating range of the injector (15).

5. Injector according to Claim 1, 3 or 4, **characterized in that** the base wall (14), which acts as a diaphragm, is oriented at least approximately at right angles to the high-pressure line (10, 10a).

6. Injector according to Claim 1, 3, 4 or 5, **characterized in that** a pressure distributor (19) is arranged between the base wall (14) and the sensor (15).

7. Injector according to Claim 1, 3, 4, 5 or 6, **characterized in that** an insulation body (21) is provided between the sensor (15) and the cover (18).

8. Injector according to one of the preceding claims, **characterized in that** the injector is a fuel injector, and **in that** the medium is fuel.

## Revendications

1. Injecteur présentant un corps d'injecteur (1) ainsi qu'un corps de buse (2) avec un alésage (4a) recevant un pointeau de buse (5), le pointeau de buse (5) pouvant être déplacé par translation dans l'alésage (4a) et présentant une pointe de pointeau de buse (7) coopérant avec un siège de corps de buse (8), au moins une ouverture de buse (9) étant associée au siège de corps de buse (8), laquelle est connectée à une conduite haute pression (10, 10a) pour un fluide dans le corps d'injecteur (1) et/ou dans le corps de buse (2) de manière commandée par le pointeau de buse (5), et un capteur (15) étant prévu pour enregistrer une allure de pression du fluide, le capteur (15) étant inséré dans un évidement (12) orienté vers la conduite haute pression (10, 10a), et en ce que l'évidement (12) est fermé du côté opposé à la conduite haute pression (10, 10a) par un couvercle (18).
**caractérisé en ce que** le capteur (15) est précontraint par pression entre une paroi de fond (14) de l'évidement (12) adjacente à la conduite haute pression (10) et le couvercle (18) installé dans l'évidement (12) et **en ce que** le couvercle (18) est soudé au corps d'injecteur (1), le capteur (15), pendant l'opération de soudage, étant précontraint à une valeur définie entre la paroi de fond (14) et le couvercle (18).

2. Injecteur selon la revendication 1,
**caractérisé en ce que** l'évidement (12) est disposé dans le corps d'injecteur (1).

3. Injecteur selon l'une quelconque des revendications précédentes, **caractérisé en ce que** le matériau du couvercle (18) présente un coefficient de dilatation thermique différent de celui du corps d'injecteur (1) et/ou du corps de buse (2), notamment supérieur.

4. Injecteur selon la revendication 1 ou 3, **caractérisé en ce que** le capteur (15) est précontraint de telle sorte qu'un maximum de rigidité (25) d'un module constitué par au moins le corps d'injecteur (1) et/ou le corps de buse (2), le capteur (15) et le couvercle (18) est ajusté dans une plage de fonctionnement de température de l'injecteur (15).

5. Injecteur selon la revendication 1, 3 ou 4, **caractérisé en ce que** la paroi de fond (14) agissant en tant que membrane est au moins orientée approximativement perpendiculairement à la conduite haute pression (10, 10a).

6. Injecteur selon la revendication 1, 3, 4 ou 5, **caractérisé en ce qu'**entre la paroi de fond (14) et le capteur (15) est disposé un répartiteur de pression (19).

7. Injecteur selon la revendication 1, 3, 4, 5 ou 6, **caractérisé en ce qu'**entre le capteur (15) et le couvercle (18) est disposé un corps isolant (21).

8. Injecteur selon l'une quelconque des revendications précédentes,
**caractérisé en ce que** l'injecteur est un injecteur de carburant, et **en ce que** le fluide est du carburant.
